# EUROPEAN PATENT SPECIFICATION

(11) **EP 1 837 164 B1**
(45) Date of publication and mention of the grant of the patent: **10.11.2010**
(21) Application number: 07103028.2
(22) Date of filing: 26.02.2007
(51) Int. Cl.: B28B 17/00, E04C 5/06

(54) **Method and apparatus for applying plastic sheets to the walls of a foundation mould element**
Verfahren und Vorrichtung zur Anbringung von Kunststoffplatten an den Wänden eines Fundamentformelements
Procédé et appareil pour appliquer des feuilles en plastique sur les murs d'un élément de moulage de fondation

(30) Priority: 23.03.2006 FI 20065190
(43) Date of publication of application: 26.09.2007
(73) Proprietor: Lammi-Perustus Oy, 16900 Lammi (FI)
(72) Inventor: Jokinen, Reijo, 00330 Helsinki (FI)
(74) Representative: LEITZINGER OY

(56) References cited:
- DE-U1- 29 700 133
- FR-A- 2 863 195
- US-A- 3 932 249

## Description

The invention relates to a method for applying plastic sheets to the walls of a foundation mould element, the foundation mould element comprising a mould frame fabricated from reinforcement bars and having its reinforcement bars fixed to each other at cross-over points thereof for a coarse mesh, which is designed as an elongated gutter with a bottom and side walls, and the side walls are laminated on opposite sides of the reinforcement bars with plastic sheets, which are brought by heat to a face-to-face engagement in the area of reinforcement mesh openings.

The invention relates also to an apparatus for applying plastic sheets to the walls of a foundation mould element, the foundation mould element comprising a mould frame fabricated from reinforcement bars and having its reinforcement bars fixed to each other at cross-over points thereof for a coarse mesh, which is designed as an elongated gutter with a bottom and side walls.

This type of foundation mould element is known e.g. from German utility model DE 29700133.7. An object of the invention is to upgrade and improve the fabrication method of such a foundation mould element in a manner that the plastic sheets can be applied face to face over a larger area and more rapidly, as a result of which the foundation mould element becomes more stable than before.

This object is accomplished by a method of the invention on the basis of the characterizing features presented in the appended claim 1.

The method is feasible by an apparatus of the invention, whose characterizing features are presented in the appended claim 2.

One exemplary embodiment of the invention will now be described in more detail with reference to the accompanying drawings, in which
- Fig. 1: shows an apparatus capable of implementing a method of the invention in a section crosswise to the assembly line and

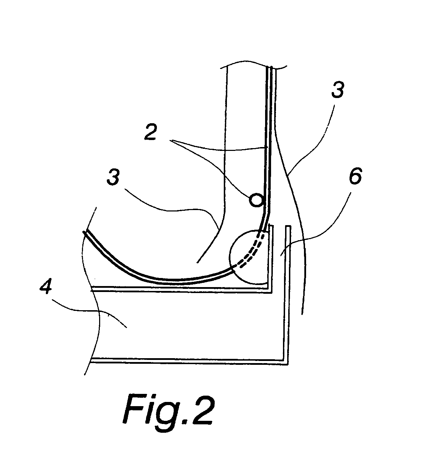

- Fig. 2: shows a detail of fig. 1 in a larger scale.

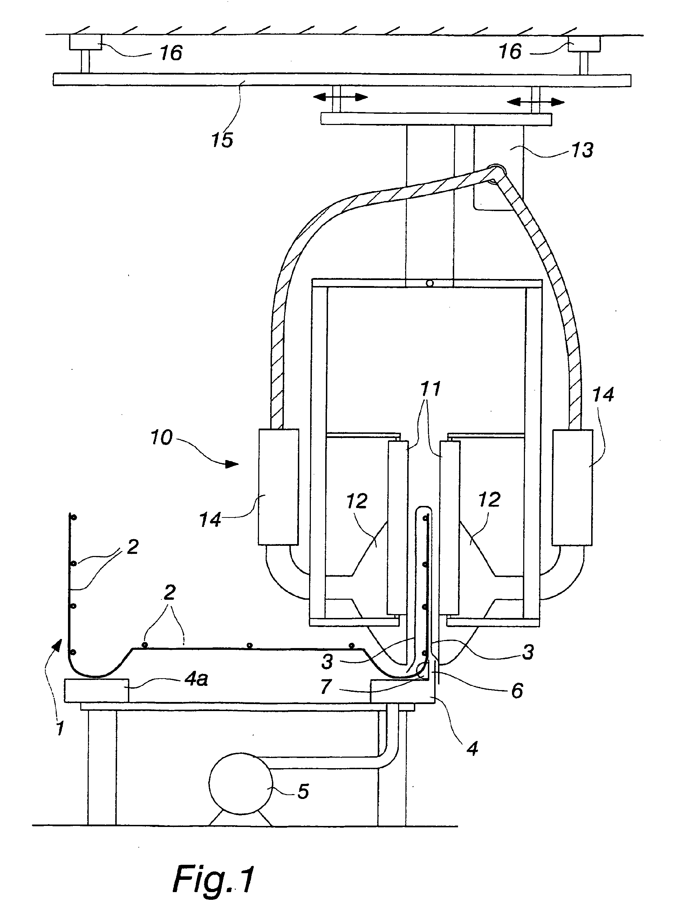

A foundation mould element 1 comprises a mould frame fabricated from reinforcement bars 2 and having its reinforcement bars 2 fixed to each other at cross-over points thereof for a coarse mesh, which is designed as an elongated gutter with a bottom and side walls. Fig. 1 depicts the gutter-shaped foundation mould element 1 in cross-section. The bottom has its middle section slightly raised, thus providing a foundation reinforcement left within the casting. The foundation mould element is intended for use in the process of casting wall footings with a ground clearance, pile caps or the like foundations, both as a foundation reinforcement and as casting mould walls.

The mould element 1 has its side walls on opposite sides of the reinforcement bars 2 laminated with plastic sheets 3, which are brought by heat to a face-to-face engagement in the area of reinforcement mesh openings. In order to provide an effective and rapid engagement over the entire area of the openings, the apparatus of the invention is provided with a suction beam 4, having its suction slot 6 opening onto the lower wall portion of a mould frame 1 fitted in the apparatus. Hence, a vacuum can be extracted between the engaging plastic sheets 3 by means of the suction slot 6, on the opposite sides of which the plastic sheet 3 has its the bottom hems adapted to settle. The plastic sheet 3 is reeled off double-folded, such that the fold of a double plastic sheet aligns itself with the top edge of a mould element wall. Adjacent to the suction slot 6, on the bottom side of the mould element 1, is an elastic bladder 7 which extends substantially over the entire length of the suction slot 6. In the sense of its thickness, the bladder 7 protrudes inside a wall of the mould element 1 in the area of mesh openings. The bladder of such a configuration functions as a sealing, against which settles the hem of a plastic sheet providing the internal side of a mould wall. In the illustrated case, the bladder 7 is a hollow rubber tube with a semi-circular cross-section.

The suction beam 4 has the suction side of a fan 5 connected thereto. The active vacuum need not be very significant as long as the extracted amount of air is sufficient for providing a suction, which despite the leaks is able to bring the sides of a plastic sheet 3 to a face-to-face engagement over the length of an entire element 1. The element 1 has a length which is typically a few meters and a width which is typically within the range of 40-70 cm. The element 1 has its second bottom edge resting on top of a beam 4a. The beam 4a need not be a suction beam as long as the element 1 is turned around after the first wall lamination, such that the second wall lands on the beam 4. If desired, the beam 4a can also be designed as a suction beam, in which case the element need not be turned around in between.

The apparatus includes a heat nozzle device 10, which is provided with roller guides 11 and which has its heat nozzle 12 supplied with air blasted by a fan 13 through resistance heaters 14. The heat nozzle device 10 is suspended and supported by rails 16 for mobility above the suction beam 4 in its longitudinal direction, i.e. the rails 16 have a longitudinal direction which is orthogonal to the plane of the drawing. The heat nozzle device 10 is suspended to the guide rails 16 by way of a crosswise guide bar 15, along which the heat nozzle device 10 is provided with a crosswise mobility.

The beams 4 and 4a have a spacing which is preferably adjustable, whereby the apparatus is adaptable for the mould elements 1 of diverse widths.

The invention is not limited to foregoing exemplary embodiment. In an alternative embodiment, the heat nozzle device 10 is stationary and the mould element, along with its footing, is mobile in such a way that a wall of the mould element passes through between the heat nozzles 12. In this case, the mould element and its footing beams 4, 4a are mobile in the longitudinal direction thereof, which is why the footing, along with its beams 4, 4a and vacuum extractor 5, must be propped on guide rails (not shown) extending lengthwise of the beams.

## Claims

1. A method for applying plastic sheets to the walls of a foundation mould element (1), the foundation mould element comprising a mould frame fabricated from reinforcement bars (2) and having its reinforcement bars (2) fixed to each other at cross-over points thereof for a coarse mesh, which is designed as an elongated gutter with a bottom and side walls, and the side walls are laminated on opposite sides of the reinforcement bars (2) with plastic sheets (3), which are brought by heat to a face-to-face engagement in the area of reinforcement mesh openings, **characterized in that** a vacuum is extracted between the engaging plastic sheets (3) by means of a suction slot (6) in the lower wall portion, the bottom hems of the plastic sheet (3) being adapted to settle on the opposite sides thereof, and that a heat nozzle device (10, 12) is conveyed along a wall of the mould element or a mould element is moved relative to the heat nozzle device (10, 12) for applying heat blasts from opposite sides of the wall to the presently laminating plastic sheets (3) while the vacuum extraction is in progress between the sheets (3).

2. An apparatus for applying plastic sheets to the walls of a foundation mould element (1), the foundation mould element comprising a mould frame fabricated from reinforcement bars (2) and having its reinforcement bars (2) fixed to each other at cross-over points thereof for a coarse mesh, which is designed as an elongated gutter with a bottom and side walls, **characterized in that** the apparatus comprises a suction beam (4), having its suction slot (6) opening onto the lower wall portion of a mould frame (1) fitted in the apparatus, as well as a heat nozzle device (10, 12), which is provided with guides (11) and suspended and supported by rails (16) for mobility above the suction beam (4) in its longitudinal direction or relative to which the mould element, together with its footing (4, 4a), is movable in its longitudinal direction.

3. An apparatus as set forth in claim 2, **characterized in that** the guides (11) are roller guides, a wall of the foundation mould element (1) fitting therebetween.

4. An apparatus as set forth in any of claims 2-3, **characterized in that** adjacent to the suction slot (6), on the bottom side of the mould element (1), is an elastic bladder (7) which extends substantially over the entire length of the suction slot (6) and which, in its thickness sense, protrudes inside a wall of the mould element (1) in the area of mesh openings, the elastic bladder (7) functioning as a sealing for the hem of a plastic sheet providing the internal side of a mould wall.

## Patentansprüche

1. Verfahren zur Anbringung von Kunststoffplatten an den Wänden eines Fundamentformelements (1), wobei das Fundamentformelement einen aus Verstärkungsstäben (2) hergestellten Formrahmen umfasst, dessen Verstärkungsstäbe (2) für ein grobes Netz an ihren Kreuzungspunkten aneinander fixiert sind, und als längliche Rinne mit einer unteren Wand und Seitenwänden gestaltet ist, wobei die Seitenwände an entgegengesetzten Seiten der Verstärkungsstäbe (2) mit Kunststoffplatten (3) beschichtet sind, die im Bereich der Verstärkungsnetzöffnungen durch Hitze in einen Fläche-an-Fläche-Eingriff gebracht werden, **dadurch gekennzeichnet, dass** durch einen Saugschlitz (6) im unteren Wandabschnitt ein Vakuum zwischen den in Eingriff stehenden Kunststoffplatten (3) gezogen wird, wobei die unteren Stoßkanten der Kunststoffplatten (3) dazu geeignet sind, sich an deren entgegengesetzten Seiten zu setzen, und dass eine Heißluftdüsenvorrichtung (10, 12) entlang einer Wand des Formelements befördert wird oder ein Formelement in Bezug auf die Heißluftdüsenvorrichtung (10, 12) bewegt wird, um Heißluftstöße von entgegengesetzten Seiten der Wand auf die gegenwärtig beschichtenden Kunststoffplatten (3) auszuüben, während das Ziehen des Vakuums zwischen den Platten (3) im Gange ist.

2. Vorrichtung zur Anbringung von Kunststoffplatten an den Wänden eines Fundamentformelements (1), wobei das Fundamentformelement einen aus Verstärkungsstäben (2) hergestellten Formrahmen umfasst, dessen Verstärkungsstäbe (2) für ein grobes Netz an ihren Kreuzungspunkten aneinander fixiert sind, und als längliche Rinne mit einer unteren Wand und Seitenwänden gestaltet ist, **dadurch gekennzeichnet, dass** die Vorrichtung einen Saugbalken (4), dessen Saugschlitz (6) sich zum unteren Wandabschnitt eines in die Vorrichtung eingesetzten Formrahmens (1) öffnet, wie auch eine Heißluftdüsenvorrichtung (10, 12) umfasst, die mit Führungen (11) versehen ist und zur Beweglichkeit über dem Saugbalken (4) in dessen Längsrichtung durch Schienen (16) aufgehängt und gehalten wird, oder in Bezug auf die das Formelement zusammen mit seiner Basis (4, 4a) in seiner Längsrichtung beweglich ist.

3. Vorrichtung nach Anspruch 4, **dadurch gekennzeichnet, dass** die Führungen (11) Rollenführungen sind, zwischen die eine Wand des Fundamentformelements (1) passt.

4. Vorrichtung nach einem der Ansprüche 2 bis 3, **dadurch gekennzeichnet, dass** neben dem Saugschlitz (6) an der Unterseite des Formelements (1) eine elastische Blase (7) vorhanden ist, die sich im Wesentlichen über die gesamte Länge des Saugschlitzes (6) erstreckt, und die, in ihrer Dickenrichtung, im Bereich der Maschenöffnungen ins Innere einer Wand des Formelements (1) vorspringt, wobei die elastische Blase (7) als Dichtung für die Stoßkante einer Kunststoffplatte, welche die Innenseite einer Formwand bereitstellt, wirkt.

## Revendications

1. Méthode pour l'application de feuilles plastiques sur les parois d'un élément de moule de fondation (1), l'élément de moule de fondation comprenant un cadre de moule fabriqué avec des barres de renfort (2) et dont les barres de renfort (2) sont fixées les unes aux autres en des points de croisement pour un maillage large, qui est conçu comme une gouttière allongée, avec une paroi de fond et des parois latérales, les parois latérales étant revêtues de feuilles plastiques (3) sur des côtés opposés des barres de renfort (2), lesdites feuilles étant mises en engagement face à face par la chaleur, dans la région d'ouvertures de maillage de renfort, **caractérisée en ce qu'**un vide est extrait entre les feuilles plastiques engagées (3), à l'aide d'une fente d'aspiration (6) dans la portion de paroi inférieure, le bord inférieur rabattu des feuilles plastiques (3) étant adapté pour être placé sur les côtés opposés de celles-ci, et **en ce qu'**un dispositif à buse de chauffage (10, 12) est déplacé le long d'une paroi de l'élément de moule, ou un élément de moule est déplacé par rapport au dispositif à buse de chauffage (10, 12), pour appliquer des souffles chauds par des côtés opposés de la paroi, vers les feuilles plastiques (3) contrecollées, tandis que l'extraction de vide est en cours entre les feuilles (3).

2. Appareil pour l'application de feuilles plastiques sur les parois d'un élément de moule de fondation (1), l'élément de moule de fondation comprenant un cadre de moule fabriqué avec des barres de renfort (2), et dont les barres de renfort (2) sont fixées les unes aux autres en des points de croisement pour un maillage large, qui est conçu comme une gouttière allongée, avec une paroi de fond et des parois latérales, **caractérisé en ce que** l'appareil comprend une barre d'aspiration (4) possédant une fente d'aspiration (6) ouverture sur la portion de paroi inférieure d'un cadre de moule (1) installé dans l'appareil, ainsi qu'un dispositif à buse de chauffage (10, 12) pourvu de guides (11) et suspendu et supporté par des rails (16) pour le déplacement au-dessus de la barre d'aspiration (4), dans son sens longitudinal, ou par rapport auquel l'élément de moule, ensemble avec son pied (4, 4a), est déplaçable dans son sens longitudinal.

3. Appareil selon la revendication 2, **caractérisé en ce que** les guides (11) sont des guides à rouleaux, entre lesquels est installée une paroi de l'élément de moule de fondation (1).

4. Appareil selon l'une quelconque des revendications 2 ou 3, **caractérisé en ce qu'**à côté de la fente d'aspiration (6), sur la face inférieure de l'élément de moule (1), se trouve une poche élastique (7), qui s'étend substantiellement sur toute la longueur de la fente d'aspiration (6) et qui, dans le sens de sa largeur, fait saillie à l'intérieur d'une paroi de l'élément de moule (1), dans la région des ouvertures de maillage, la poche élastique (7) fonctionnant comme un joint d'étanchéité pour le bord rabattu d'une feuille plastique garnissant la face intérieure d'une paroi de moule.
